# EUROPÄISCHE PATENTSCHRIFT

(11) **EP 0 902 369 B1**
(45) Veröffentlichungstag und Bekanntmachung des Hinweises auf die Patenterteilung: **18.12.2002**
(21) Anmeldenummer: 98440187.7
(22) Anmeldetag: 28.08.1998
(51) Int. Cl.: G06F 11/16, G06F 11/18

(54) **Verfahren zur Isolation eines defekten Rechners in einem fehlertoleranten Mehrrechnersystem**
Method for isolating a defective computer in a fault-tolerant multiprocessor system
Méthode pour l'isolation d'un ordinateur défectueux dans un système à multiprocesseur à tolérance de fautes

(30) Priorität: 12.09.1997 DE 19740136
(43) Veröffentlichungstag der Anmeldung: 17.03.1999
(73) Patentinhaber: ALCATEL, 75088 Paris (FR)
(72) Erfinder: Preisinger, Kurt, A-1060 Wien (AT); Fitzke, Andre, D-70806 Korn westheim (DE); Kantz, Heinz, Dr., A-1230 Wien (AT)
(74) Vertreter: Brose, Gerhard, Dipl.-Ing.

(56) Entgegenhaltungen:
- WO-A-92/03787
- DE-A- 4 135 640

## Beschreibung

Die Erfindung betrifft ein Verfahren zur Isolation eines als defekt identifizierten Rechners in einem fehlertoleranten Mehrrechnersystem nach dem Oberbegriff des Anspruchs 1. Die Erfindung betrifft ferner ein fehlertolerantes Mehrrechnersystem nach dem Oberbegriff des Anspruchs 3.

Fehlertolerante Mehrrechnersysteme - meist 2-aus-3-Rechner-Systemewerden zur Steuerung vor allem solcher Prozesse eingesetzt, bei denen besonders hohe Anforderungen hinsichtlich der Sicherheit und Verfügbarkeit der Steuerung gestellt werden. Beispiele für derartige Prozesse sind etwa die Sicherung von Fahrwegen im Eisenbahnverkehr oder die Überwachung von Kernkraftwerken. Ein Rechnersystem bezeichnet man als fehlertolerant, wenn selbst bei Auftreten einer begrenzten Anzahl von Hardware- und/oder Softwarefehlern das System noch funktioniert. Von derartigen Datenverarbeitungsanlagen verlangt man überdies, dass sie mit den übrigen zur Prozesssteuerung erforderlichen Vorrichtungen nach dem "Fail-Safe"-Prinzip zusammenwirken. Dies bedeutet, dass selbst bei einem völligen Ausfall der Datenverarbeitungsanlage der Prozess unter keinen Umständen in einen gefährlichen Zustand übergehen darf.

Ein Verfahren nach dem Oberbegriff des Anspruchs 1 ist aus der WO-A1-9203787 bekannt, wobei eine Hardware-Vergleicher-Anordnung vorgesehen ist, die eine Abschaltung eines defekten Rechners eines Mehrrechnersystems bewirkt. Falls ein defekter Rechner sich nicht abschaltet, veranlassen die fehlerfreien Rechner das Abschalten des Mehrrechnersystms.

In der EP-B1-0 246 218 wird nicht die Isolation, sondern die noch vor einer Isolation notwendige Identifikation eines fehlerhaften Rechners in einem redundanten Datenverarbeitungssystem beschrieben. Das bekannte Datenverarbeitungssystem besteht aus mehreren Rechnerknoten, die ihrerseits als Mehrrechnersysteme - vorzugsweise als 2-aus-3-Rechner-Systeme - ausgeführt sind. Die Knoten sind über serielle Punkt-zu-Punkt-Verbindungen miteinander vernetzt. Die Rechner innerhalb eines jeden Knotens sind ebenfalls vollständig miteinander vermascht. Der für eine Majoritätsentscheidung erforderliche Abgleich der von den einzelnen Rechnern innerhalb eines Knotens gelieferten Ergebnisse ("Voting") wird nicht zentral durchgeführt, sondern verteilt sich auf die einzelnen Rechner.

Ferner ist aus der DE-A1-41 35 640 ein 2-aus-3-Rechner-System bekannt, bei dem die Rechner ebenfalls über einen eigenen Control-Bus untereinander Daten austauschen können. Die Rechner kommunizieren mit dem Prozess über einen davon unabhängigen E/A-Datenbus. Wenn ein Rechner als defekt identifiziert ist, so veranlassen dort die beiden nicht defekten Rechner, dass der Datenport zum E/A-Bus gesperrt wird. Je nach Art des Defekts kann es jedoch vorkommen, dass den nicht defekten Rechnern ein solcher Eingriff in den Datenport des defekten Rechners nicht gelingt. Es ist dann möglich, dass der defekte Rechner weiterhin fehlerbehaftete Daten an den E/A-Bus ausgibt. Sollte ein weiterer Rechner defekt werden und ebenfalls fehlerbehaftete Daten an den E/A-Bus ausgeben, so könnten diese Daten zufällig übereinstimmen. Ein Empfänger könnte diese beiden Ergebnisse dann aufgrund ihrer Übereinstimmung für korrekt halten, sie daher akzeptieren und Steuerhandlungen vornehmen, die zu einem nicht sicheren Zustand führen könnten.

Schließlich ist aus der DE-C2-32 08 573 eine Auswahleinrichtung für ein Dreirechner-System bekannt, bei der ein als defekt identifizierter Rechner über einen Relaisschalter vom Ein-/Ausgabekanal irreversibel abgetrennt wird. Der defekte Rechner kann dort - wie auch bei dem Mehrrechnersystem gemäß der oben genannten WO-A1-9203787 - nach einem Neustart nicht wieder ohne Eingreifen einer Bedienperson in das System eingebunden werden. Diese Lösung ist vergleichsweise aufwendig, da der Relaisschalter eigens für jedes Rechnersystem entwickelt werden muss. Ferner sind Steuerleitungen zur Steuerung des Relaisschalters bereitzustellen.

Es ist daher Aufgabe der Erfindung, ein Verfahren anzugeben, mit dessen Hilfe ein als defekt identifizierter Rechner in einem Mehrrechnersystem wirkungsvoll unter Berücksichtigung des "Fail-Safe"-Prinzips von den nicht defekten Rechnern isoliert werden kann. Das Verfahren soll unter keinen Umständen zu nicht sicheren Prozesszuständen führen. Außerdem soll das Verfahren nicht den Einsatz zusätzlicher Hardware wie etwa Relais-Schalter erfordern.

Die Erfindung löst diese Aufgabe durch die in Anspruch 1 angegebene Lehre. Da erfindungsgemäß der defekte Rechner aufgefordert wird, sich herunterzufahren, ist eine nachfolgende Wiedereinbindung des Rechners - sofern ein Neustart geglückt ist - auch ohne Eingreifen einer Bedienperson möglich. Die Sicherheit des Systems wird dadurch gewährleistet, dass die nicht defekten Rechner selbst herunterfahren, falls der defekte Rechner dem Herunterfahrkommando nicht erfolgreich nachgekommen ist. Falls nämlich der defekte Rechner trotz Herunterfahrkommandos weiterhin Ergebnisse an den Ein-/Ausgabekanal ausgibt, so kann nur durch ein Herunterfahren der nicht defekten Rechner zuverlässig verhindert werden, dass es zu der oben bereits erwähnten zufälligen Übereinstimmung von Ergebnissen von zwei defekten Rechnern und dadurch zu einem unsicheren Zustand kommt.

Die Aufgabe, dem defekten Rechner ein Herunterfahrkommando zu übermitteln, wird von den nicht defekten Rechnern übernommen. Die nicht defekten Rechner überprüfen auch, ob der defekte Rechner Ergebnisse an den gemeinsamen Ein-/Ausgabekanal ausgibt. Ferner fahren die nicht defekten Rechner sich selbst herunter, falls der defekte Rechner nach einer vorbestimmten Zeitspanne nach dem Herunterfahrkommando noch immer Ergebnisse an den gemeinsamen Ein-/Ausgabekanal ausgibt. Damit geht das Rechnersystem in einen sicheren Zustand über, denn es wird - wie in sicheren Rechnersystemen üblich - vorausgesetzt, dass an einer sicheren Ausgabe immer zwei Rechner mitwirken müssen. Ein einzelner Rechner alleine kann unter keinen Umständen wirkungsvoll in den zu steuernden Prozess eingreifen. Zusätzliche Hardware-Vorrichtungen - wie bei dem Mehrrechnersystem gemäß der oben genannten WO-A1-9203787 - sind nicht notwendig.

Bei einem vorteilhaften Ausführungsbeispiel nach Anspruch 2 stellen die nicht defekten Rechner den Austausch von Daten mit dem defekten Rechner ein, nachdem dieser das Herunterfahrkommando erhalten hat. Dadurch wird dem defekten Rechner erneut signalisiert, dass er alle Ausgabe an den gemeinsamen Ein-/Ausgabekanal einstellen und sich herunterfahren soll.

Die Erfindung wird nachfolgend anhand der Ausführungsbeispiele und der Zeichnungen eingehend erläutert. Es zeigen:
Fig. 1: Eine Darstellung des erfindungsgemäßen Verfahrens nach Anspruch 1 in Form eines Flußdiagramms,
Fig. 2: Eine Darstellung des erfindungsgemäßen Verfahrens nach Anspruch 3 in Form eines Flußdiagramms,
Fig. 3: Eine schematische Darstellung für ein Ausführungsbeispiel eines erfindungsgemäßen Mehrrechnersystems nach Anspruch 4,
Fig. 4: Eine schematische Darstellung für ein anderes Ausführungsbeispiel eines erfindungsgemäßen Mehrrechnersystems nach Anspruch 4.

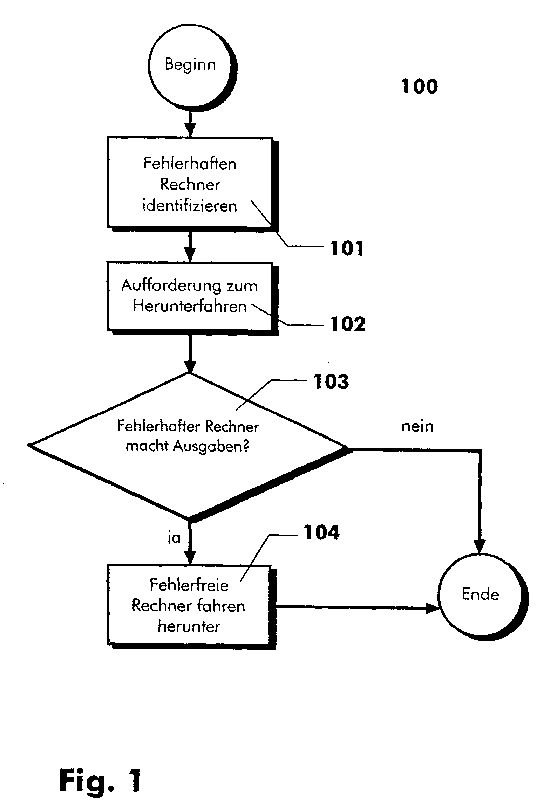

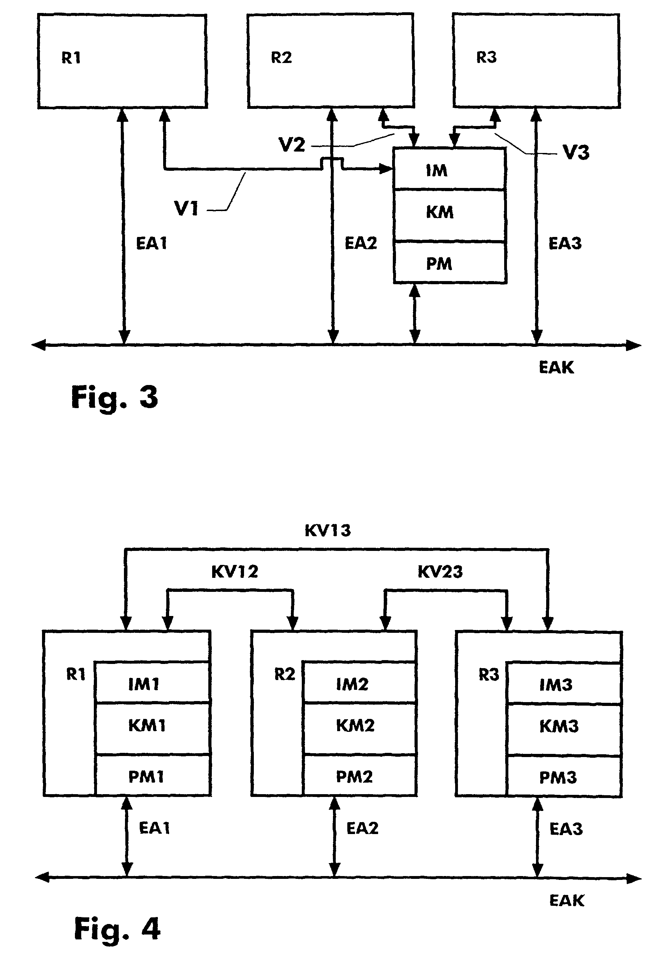

Fig. 1 stellt das erfindungsgemäße Verfahren 100 nach Anspruch 1 in Form eines Flußdiagramms dar. Ein Mehrrechnersystem, in dem das Verfahren 100 vorteilhaft angewendet werden kann, zeigt Fig. 4. Dieses Mehrrechnersystem besteht in diesem Beispiel aus 3 Rechnern R1, R2, R3, die über ein systeminternes Kommunikationsnetz miteinander vermascht sind, d. h. jeder Rechner kann über eine eigene Kommunikationsverbindung mit jedem anderen Rechner Daten austauschen. So besteht zwischen den Rechnern R1 und R2 die Kommunikationsverbindung KV12, zwischen den Rechnern R2 und R3 die Kommunikationsverbindung KV23 und zwischen den Rechner R1 und R3 die Kommunikationsverbindung KV13. Der Austausch von Daten zwischen dem Mehrrechnersystem und dem zu steuernden Prozeß erfolgt über einen gemeinsamen, vom systeminternen Kommunikationsnetz unabhängigen Ein/Ausgabekanal EAK.

In einem ersten Schritt 101 wird nach dem erfindungsgemäßen Verfahren 100 ein defekter Rechner identifiziert. In der Regel erfolgt diese Identifizierung dadurch, daß die drei Rechner R1, R2, R3 über das systeminterne Kommunikationsnetz die von ihnen berechneten Ergebnisse untereinander austauschen. Stimmen alle Ergebnisse miteinander überein, so geht das System davon aus, daß kein Rechner defekt ist. Weicht jedoch das Ergebnis eines Rechners von den Ergebnissen der anderen beiden Rechner ab, so wird dieses Ergebnis als fehlerbehaftet und daher der entsprechende Rechner als defekt angesehen. Aufgrund der vollständigen Vermaschung der Rechner untereinander ist stets eine eindeutige Zuordnung von Ergebnissen gewährleistet, so daß der defekte Rechner eindeutig identifiziert werden kann. Ein besonders vorteilhaftes Verfahren zur Fehleridentifikation ist in der bereits oben zitierten Patentschrift EP-B1-0 246 218 beschrieben, auf die an dieser Stelle verwiesen wird.

In einem zweiten Schritt 102 wird erfindungsgemäß dem als defekt identifizierten Rechner ein Herunterfahrkommando übermittelt. Dieses Kommando kann beispielsweise von externen Kommandomitteln gegeben werden, wie dies bei der Beschreibung eines erfindungsgemäßen Mehrrechnerssystems weiter unten näher beschrieben wird. Besonders dann jedoch, wenn die Fehleridentifikation dezentral, d. h. auf alle Rechner verteilt, durchgeführt wird, bietet es sich an, dieses Kommando von den nicht defekten Rechnern oder von einem der nicht defekten Rechner ausgehen zu lassen. Unter Herunterfahren wird hier verstanden, daß der betreffende Rechner sein Anwendungsprogramm, aber auch sein Betriebssystem mit allen Schnittstellentreibern ordnungsgemäß beendet. Eine solche ordnungsgemäße Beendigung schließt beispielsweise die Durchführung von Diagnosen und Speicherung von Daten auf nicht-flüchtigen Trägern ein. Nach dem Herunterfahren gibt der Rechner keine Daten mehr aus, und zwar weder über den Ein-/Ausgabekanal noch über das systeminterne Kommunikationsnetz. Falls keine Fehler detektiert wurden und es das Sicherheitskonzept zuläßt, wird der Rechner anschließend wieder hochgefahren. Dies schließt in der Regel umfangreiche Hardwaretests mit ein.

In einem nächsten Schritt 103 wird geprüft, ob der als defekt erkannte Rechner weiterhin Ergebnisse an den gemeinsamen Ein-/Ausgabekanal ausgibt. Dies kommt einer Überprüfung gleich, ob der defekte Rechner dem Herunterfahrkommando auch tatsächlich nachgekommen ist. Wie bereits erwähnt, kann ein Rechner nach dem Herunterfahren keine Ausgaben an den gemeinsamen Ein-/Ausgabekanal mehr machen. Lassen sich dennoch solche Ausgaben nachweisen, dann ist davon auszugehen, daß der Defekt derart schwerwiegend ist, daß ein Herunterfahren nicht mehr möglich war. Ob der Rechner Ausgaben an den Ein-/Ausgabekanal macht, kann am Ein/Ausgabekanal selbst nachgewiesen werden. Auch hier ist es wieder möglich, diese Aufgabe von externen Prüfmitteln oder aber von den nicht defekten Rechnern selbst durchführen zu lassen.

Wird bei dieser Prüfung festgestellt, daß der defekte Rechner nach einer vorbestimmten Zeitspanne noch immer Ausgaben an den gemeinsamen Ein/Ausgabekanal macht, so fahren die nicht defekten Rechner in einem Schritt 104 sich herunter. Dieses Herunterfahren kann von externen Prüfmitteln veranlaßt werden oder von den nicht defekten Rechnern selbst. Durch das Herunterfahren geht, wie oben erläutert, das System in einen sicheren Zustand über, denn der defekte Rechner kann alleine keine Ausgaben machen, die auf der Seite eines die Ausgaben aufnehmenden Empfängers eine Wirkung entfalten könnten. Dazu müssen nämlich immer - im Falle eines 2-aus-3-Rechner-Systems - wenigstens zwei Ergebnisse übereinstimmen.

Wird hingegen bei dieser Prüfung 103 festgestellt, daß der defekte Rechner nach einer vorbestimmten Zeitspanne keine Ausgaben an den gemeinsamen Ein-/Ausgabekanal mehr macht, so fahren die nicht defekten Rechner in der von üblichen 2-aus-3-Rechner-Systemen bekannten Weise mit ihrer Rechentätigkeit fort. Die vorbestimmte Zeitspanne sollte zumindest so lange sein, wie ein defekter Rechner zum Herunterfahren benötigt. Ansonsten könnten die nicht defekten Rechner herunterfahren, obwohl der defekte Rechner sich erfolgreich herunterfährt und somit ein gefährlicher Zustand nicht eintreten kann.

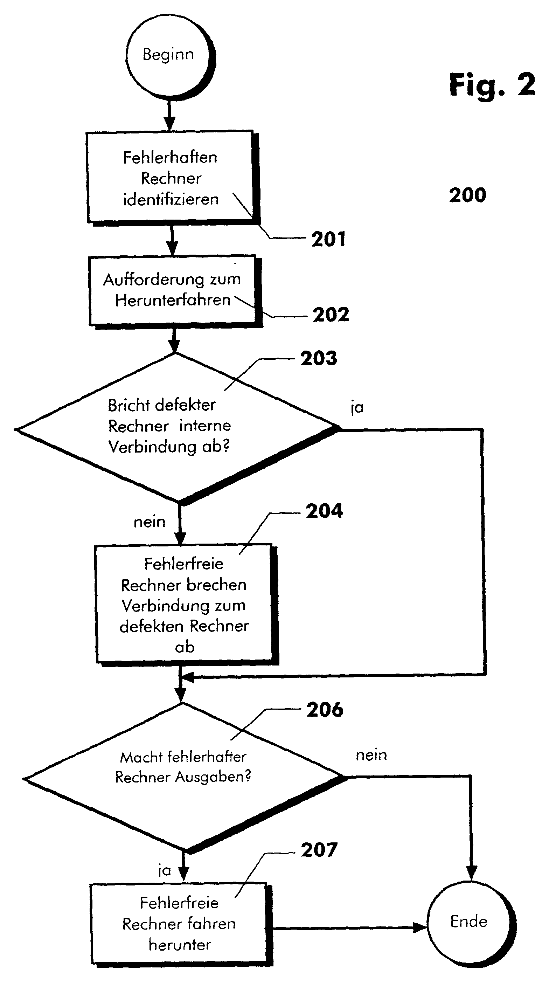

Ein anderes Ausführungsbeispiel des erfindungsgemäßen Verfahrens nach Anspruch 3 ist dargestellt in Fig. 2. Die Schritte 201 und 202 entsprechen den Schritten 101 bis 102. Zusätzlich zu den in Fig. 1 gezeigten Schritten ist hier jedoch vorgesehen, daß in einem Schritt 204 die nicht defekten Rechner von sich aus den Datenaustausch mit dem defekten Rechner über das systeminterne Kommunikationsnetz einstellen. Dadurch wird dem defekten Rechner erneut signalisiert, daß er nicht mehr als gleichberechtigter Rechner im System anerkannt wird und sich daher herunterfahren soll. Die nicht defekten Rechner können den Datenaustausch in jedem Fall nach der Übermittlung des Herunterfahrkommandos 202 einstellen oder aber, wie in Fig. 2 in Schritt 203 gezeigt, dies davon abhängig machen, ob der defekte Rechner von sich aus den Datenaustausch einstellt. Durch den zusätzlichen Schritt 204 wird die Wahrscheinlichkeit verringert, daß der defekte Rechner sich nicht herunterfährt und es deswegen zu einem Herunterfahren auch der nicht defekten Rechner in Schritt 207 kommt.

Ein Ausführungsbeispiel für ein erfindungsgemäßes Mehrrechnersystem ist in Fig. 3 dargestellt. Das Mehrrechnersystem umfaßt drei Rechner R1, R2, R3, die über Ein-/Ausgabeports EA1, EA2, EA3 mit einem gemeinsamen Ein/Ausgabekanal EAK verbunden sind. Erfindungsgemäß sind ferner vorgesehen Identifikationsmittel IM zur Identifikation von defekten Rechnern und Kommandomittel KM zur Ausgabe von Herunterfahrkommandos. Diese Mittel sind mit den Rechner über ein systeminternes Kommunikationsnetz verbunden, welches die Verbindungen V1, V2 und V3 umfaßt. Auf diese Weise können die Identifikationsmittel IM und die Kommandomittel KM mit den Rechnern R1, R2, R3 kommunizieren. Außerdem sind Prüfmittel PM vorhanden, die sowohl mit dem Ein-/Ausgabekanal EAK als auch mit den drei Rechnern R1, R2, R3 verbunden sind. Diese Mittel haben die Aufgabe zu überprüfen, ob der von den Identifikationsmitteln als defekt erkannte Rechner Ergebnisse an den gemeinsamen Ein-/Ausgabekanal ausgibt. Wenn die Prüfmittel feststellen, daß der defekte Rechner nach einer vorbestimmten Zeitspanne noch immer Ergebnisse an den gemeinsamen Ein-/Ausgabekanal ausgibt, so veranlassen die Prüfmittel, daß die nicht defekten Rechner sich herunterfahren und somit ein sicherer Zustand erreicht wird.

Bei dem in Fig. 4 dargestellten Ausführungsbeispiel sind die Identifikationsmittel IM, die Kommandomittel KM sowie die Prüfmittel PM nicht extern angeordnet, sondern auf die drei Rechner aufgeteilt. Vorzugsweise handelt es sich bei diesem Mitteln IM1...IM3, KM1...KM3 und PM1...PM3 um Software-Module, die die entsprechenden Funktionen übernehmen.

## Patentansprüche

1. Verfahren zur Isolation eines als defekt identifizierten Rechners durch nicht defekte Rechner in einem Rechnersystem mit mindestens drei Rechnern (R1, R2, R3 in Fig. 4), bei dem die mindestens drei Rechner über ein systeminternes Kommunikationsnetz (KV12, KV13, KV23) miteinander Daten austauschen und von ihnen berechnete Ergebnisse an einen gemeinsamen, vom systeminternen Kommunikationsnetz unabhängigen Ein-/Ausgabekanal (EAK) ausgeben, mit folgenden Schritten:
a) dem defekten Rechner wird ein Isolationskommando übermittelt,
b) es wird überprüft, ob der defekte Rechner Ergebnisse an den gemeinsamen Ein-/Ausgabekanal (EAK) ausgibt,
c) falls der defekte Rechner nach einer vorbestimmten Zeitspanne nach dem Isolationskommando noch immer Ergebnisse an den gemeinsamen Ein-/Ausgabekanal (EAK) ausgibt, erhalten die nicht defekten Rechner ebenfalls Isolationskommandos,
**dadurch gekennzeichnet,**
**dass** das Isolationskommando als Herunterfahrkommando ausgeführt wird, wobei wenigstens einer der nicht defekten Rechner dem defekten Rechner das Herunterfahrkommando übermittelt (102) und wenigstens einer der nicht defekten Rechner überprüft, ob der defekte Rechner Ergebnisse an den gemeinsamen Ein-/Ausgabekanal (EAK) ausgibt (102), und wenigstens einer der nicht defekten Rechner den nicht defekten Rechnern das Herunterfahrkommando gibt, falls der defekte Rechner nach einer vorbestimmten Zeitspanne nach dem Herunterfahrkommando noch immer Ergebnisse an den gemeinsamen Ein-/Ausgabekanal (EAK) ausgibt (104).

2. Verfahren nach Anspruch 1, **dadurch gekennzeichnet, dass** die nicht defekten Rechner, nachdem der defekte Rechner das Herunterfahrkommando erhalten hat, keine Daten mehr mit diesem austauschen (204).

3. Mehrrechnersytem, umfassend
a) mindestens drei Rechner (R1, R2, R3),
b) ein systeminternes Kommunikationsnetz (V1, V2, V3 in Fig. 3; KV12, KV13, KV23 in Fig. 4) zum Austausch von Daten zwischen den Rechnern,
c) Rechnerschnittstellen (EA1, EA2, EA3), über die die Rechner von ihnen berechnete Ergebnisse an einen gemeinsamen Ein-/Ausgabekanal (EAK) ausgeben,
d) und Identifikationsmittel (IM; IM1, IM2, IM3) zum Identifizieren eines defekten Rechners,
**dadurch gekennzeichnet**,
e) dass Kommandomittel (KM; KM1, KM2, KM3) vorhanden sind, die über das systeminterne Kommunikationsnetz (V1, V2, V3; KV12, KV13, KV23) an einen als defekt identifizierten Rechner ein Herunterfahrkommando übermitteln,
f) dass Prüfmittel (PM; PM1, PM2, PM3) vorhanden sind, die überprüfen, ob der von den Identifikationsmitteln (IM; IM1, IM2, IM3) als defekt identifizierte Rechner Ergebnisse an den gemeinsamen Ein/Ausgabekanal ausgibt, und die veranlassen, dass den nicht defekten Rechnern ein Herunterfahrkommando übermittelt wird, falls der defekte Rechner nach einer vorbestimmten Zeitspanne, die mit der Übermittlung des Herunterfahrkommandos an den defekten Rechner beginnt, noch immer Ergebnisse an den gemeinsamen Ein/Ausgabekanal (EAK) ausgibt.

4. Mehrrechnersystem nach Anspruch 3, **dadurch gekennzeichnet**, doss das systeminterne Kommunikationsnetz (V1, V2, V3; KV12, KV13, KV23) so ausgelegt ist, dass die Rechner untereinander vollständig durch voneinander physikalisch unabhängige Leitungen vermascht sind.

## Claims

1. Method for isolating a computer identified as defective by non-defective computers in a computer system with at least three computers (R1, R2, R3 in Fig. 4), in which the at least three computers exchange data with one another via a system-internal communication network (KV12, KV13, KV23) and output results they have calculated to a common in/output channel (EAK) independent of the system-internal communication network, with the following steps:
a) an isolation command is communicated to the defective computer,
b) it is tested whether the defective computer is outputting results to the common in/output channel (EAK),
c) if the defective computer is still outputting results to the common in/output channel (EAK) after a predetermined period of time after the isolation command, the non-defective computers also receive isolation commands,
**characterised in that** the isolation command is designed as a shut-down command, wherein at least one of the non-defective computers communicates (102) the shut-down command to the defective computer and at least one of the non-defective computers tests whether the defective computer is outputting (102) results to the common in/output channel (EAK) and at least one of the non-defective computers gives the shut-down command to the non-defective computers if the defective computer is still outputting (104) results to the in/output channel (EAK) after a predetermined period of time after the shut-down command.

2. Method according to claim 1, **characterised in that** the non-defective computers no longer exchange (204) data with the defective computer after it has received the shut-down command.

3. Multicomputer system, comprising
a) at least three computers (R1, R2, R3),
b) a system-internal communication network (V1, V2, V3 in Fig. 3; KV12, KV13, KV23 in Fig. 4) for exchanging data between the computers,
c) computer interfaces (EA1, EA2, EA3) via which the computers output results they have calculated to a common in/output channel (EAK),
d) and identification means (IM; IM1, IM2, IM3) for identifying a defective computer,
**characterised in that**
e) there are command means (KM; KM1, KM2, KM3) which communicate a shut-down command to a computer identified as defective via the system-internal communication network (V1, V2, V3; KV12, KV13, KV23),
f) there are testing means (PM; PM1, PM2, PM3) which test whether the computer identified by the identification means (IM; IM1, IM2, IM3) as defective is outputting results to the common in/output channel and which cause a shut-down command to be communicated to the non-defective computers if the defective computer is still outputting results to the common in/output channel (EAK) after a predetermined period of time, which begins with the communication of the shut-down command to the defective computer.

4. Multicomputer system according to claim 3, **characterised in that** the system-internal communication network (V1, V2, V3; KV12, KV13, KV23) is designed in such a way that the computers are fully meshed among one another by lines which are physically independent of one another.

## Revendications

1. Procédé pour l'isolation d'un calculateur identifié comme défectueux par des calculateurs non défectueux dans un système de calculateurs avec au moins trois calculateurs (C1, C2, C3 sur la figure 4), dans lequel les trois calculateurs au moins interchangent des données sur un réseau de communication interne au système (LC12, LC13, LC23) et produisent des résultats calculés par ces derniers sur un canal commun d'entrée/sortie (CES) indépendant du réseau de communication interne au système, avec les étapes suivantes :
a) une commande d'isolation est transmise au calculateur défectueux,
b) on vérifie si le calculateur défectueux produit des résultats sur le canal commun d'entrée/sortie (CES),
c) si le calculateur défectueux produit encore des résultats sur le canal commun d'entrée/sortie (CES) après un intervalle de temps prédéfini, les calculateurs non défectueux obtiennent également les commandes d'isolation,
**caractérisé en ce que** la commande d'isolation est réalisée en tant commande d'arrêt, dans lequel au moins l'un des calculateurs non défectueux transmet (102) au calculateur défectueux la commande d'arrêt et au moins l'un des calculateurs non défectueux vérifie si le calculateur défectueux produit (102) des résultats sur le canal commun d'entrée/sortie (CES), et au moins l'un des calculateurs non défectueux donne la commande d'arrêt aux calculateurs non défectueux, si le calculateur défectueux produit (104) toujours des résultats sur le canal commun d'entrée/sortie (CES) après un intervalle de temps prédéfini, suite à la commande d'arrêt.

2. Procédé selon la revendication 1, **caractérisé en ce que** les calculateurs non défectueux, après que le calculateur défectueux a obtenu la commande d'arrêt, n'échangent (204) plus de données avec ce dernier.

3. Système multi-calculateurs, comprenant
a) au moins trois calculateurs (C1, C2, c3),
b) un réseau de communication interne au système (L1, L2, L3 sur la figure 3 ; LC12, LC13, LC23 sur la figure 4) pour l'échange de données entre les calculateurs,
c) les interfaces du calculateur (ES1, ES2, ES3), sur lesquelles les calculateurs produisent des résultats calculés par ces derniers sur un canal commun d'entrée/sortie (CES),
d) et des dispositifs d'identification (DI ; DI1, DI2, DI3) pour identifier un calculateur défectueux,
**caractérisé en ce que**,
e) que les dispositifs de commande (DC ; DC1, DC2, DC3) sont présents, qui transmettent une commande d'arrêt à un calculateur identifié comme défectueux sur le réseau de communication interne au système (L1, L2, L3 ; LC12, LC13, LC23),
f) les dispositifs de vérification (DV ; DV1, DV2, DV3) sont présents, qui vérifient si le calculateur identifié comme défectueux par les dispositifs d'identification (DI ; DI1, DI2, DI3) produit des résultats sur un canal commun d'entrée/sortie, et qui provoquent la transmission d'une commande d'arrêt aux calculateurs non défectueux, si le calculateur défectueux, après un intervalle de temps prédéfini, qui commence avec la transmission de la commande d'arrêt au calculateur défectueux, produit toujours des résultats sur le canal commun d'entrée/sortie (CES).

4. Système multi-calculateurs selon la revendication 3, **caractérisé en ce que** le réseau de communication interne au système (L1, L2, L3 ; LC12, LC13, LC23) est étudié de sorte que les calculateurs soient maillés les uns avec les autres totalement par des liaisons indépendantes physiquement les unes des autres.
